# EUROPEAN PATENT APPLICATION

(11) **EP 4 621 472 A1**
(43) Date of publication of application: **24.09.2025**
(21) Application number: 24164598.5
(22) Date of filing: 19.03.2024
(51) Int. Cl.: G02B 21/36, G01N 1/06, G02B 21/16, G01N 23/00, G01N 1/04, G06T 1/00, G01N 21/64

(54) **METHOD FOR EXAMINING A SPECIMEN AND SET OF SPECIMEN CARRIERS**

(71) Applicant: Leica Microsystems CMS GmbH, 35578 Wetzlar (DE)
(72) Inventor: Schlaudraff, Falk, 35578 Wetzlar (DE)
(74) Representative: Schaumburg und Partner Patentanwälte mbB

(57) **Abstract**

A method for examining a specimen (100) comprises the following steps: Cutting the specimen (100) into a series of specimen sections (102). Distributing the specimen sections (102) over multiple specimen carriers (200a, 200b, 200c, 602a, 602b, 602c, 702) to provide each specimen carrier with at least one of the specimen sections (102). Staining at least some of the specimen sections (102) distributed over the specimen carriers (200a, 200b, 200c, 602a, 602b, 602c, 702). Generating individual images (500) of the stained specimen sections (102) arranged on the specimen carriers (200a, 200b, 200c, 602a, 602b, 602c, 702). Combining the individual images (500) of the stained specimen sections (102) to an overall image (504) of the specimen (100).

## Description

### Technical fields

The invention relates to a method for examining a specimen. The invention further relates to a set of specimen carriers.

### Background

Spatial omics and multiplexed imaging are techniques used in biological and medical research to study complex cellular interactions, map the molecular composition of tissues at high resolution, and gain insight into disease mechanisms, particularly in cancer research, neurobiology, and developmental studies. These techniques may involve the cyclic staining of a specimen, often a tissue section, with multiple specific markers, each marker targeting a different biomolecule, followed by an imaging step to capture the spatial distribution of the markers, and thus the targets in the specimen. After each imaging step, the stains are removed or neutralized, allowing for subsequent rounds of staining and imaging without signal interference from previous cycles. Cyclic staining can potentially compromise the integrity of the specimen, as repeated exposure to chemicals used for staining and destaining can result in degradation or alteration of delicate tissue structures. In addition, repeated exposure of the specimen to intense light during imaging cycles, particularly in fluorescence microscopy, can result in photodamage. This light-induced damage can alter or attenuate fluorescent signals and degrade cellular components, further compromising specimen integrity and the reliability of the data obtained.

### Summary

It is an object to provide a method for examining a specimen and a set of specimen carriers that enable a large number of targets in a specimen to be distinguished more rapidly and with less damage to the specimen than previously known.

The aforementioned object is achieved by the subject-matter of the independent claims. Advantageous embodiments are defined in the dependent claims and the following description.

The proposed method for examining a specimen comprises the following steps: Cutting the specimen into a series of specimen sections. Distributing the specimen sections over multiple specimen carriers to provide each specimen carrier with at least one of the specimen sections. Staining at least some of the specimen sections distributed over the specimen carriers. Generating individual images of the stained specimen sections arranged on the specimen carriers. Combining the individual images of the stained specimen sections to an overall image of the specimen.

The specimen sections are stained with what is called a marker in this document. A marker in the sense of this document comprises an affinity reagent configured to bind to a specific target in the specimen, for example a specific biomarker, and a detectable label, for example a fluorescent dye. Arranging the different specimen sections on physically different specimen carriers allows the same label (but with different affinity reagents attached to them, respectively) to be used for different targets. Thus, only a limited number of labels need to be distinguished in order to distinguish a large number of targets in the specimen. This allows the method to distinguish a large number of targets in the specimen with a limited number of channels, for example different fluorescence channels, providing a highly detailed overall image of the specimen. For example, an imaging system is used that has 5 fluorescence channels, i.e. is capable of distinguishing five different fluorescent dyes in a single imaging step. With the proposed method it is possible to distinguish 100 different biomarkers by cutting the specimen into 125 specimen sections distributed over 25 specimen carriers having 5 specimen sections stained with a set of five different dyes each, wherein one dye is used for the same target on all specimen carriers as a reference. The method also limits the number of staining and imaging steps. While multiple rounds of staining and imaging may be performed in the context of this method, a single staining per specimen carrier is sufficient. This results in less damage to the sample due to chemical and physical stress, and thus more reliable data. Ideally, all specimen carriers are imaged at the same time, thereby also parallelizing the imaging step. However, even if the specimen carriers are imaged consecutively, this serial imaging is still faster than repeated staining and imaging cycles making the proposed method also faster than known methods.

In an embodiment the at least one specimen section arranged on each specimen carrier is stained with at least one marker which is different from a marker of any other specimen carrier. In this embodiment, each of the specimen carriers is stained using at least one marker that is different from any other marker used to stain the remaining specimen carriers, such that there is at least one target that is specific to each of the specimen carriers. Since the specimen carriers can be easily distinguished in the individual images, the different markers may comprise the same detectable label. In other words, the different markers are distinguished at least in their affinity reagents. Accordingly, the maximum number of different targets than can be distinguished is equal to the number of specimen carriers times the channels of an imaging device used for capturing the individual images.

In another embodiment at least some of the specimen carriers are each provided with more than one of the specimen sections. Providing more than one specimen section per specimen carrier makes it possible to image the same targets at different depths in the specimen, because the specimen sections are usually consecutively generated, e.g. with a microtome or a vibratome, wherein, for each sectioning step, the sample is moved relative to a cutting device in essentially one moving direction, preferably by the same distance, and each specimen section resulting from the sectioning originates from a different depth in the specimen with regard to the one moving direction. Thus, the overall image of the specimen may be a three-dimensional reconstruction of the specimen. Alternatively, only one specimen section is provided per specimen carrier. In this case, the overall image may be a two-dimensional reconstruction of the specimen.

In another embodiment the specimen sections are distributed over the specimen carriers such that the number of specimen sections on each specimen carrier differs at most by one from the number of specimen sections on any other specimen carrier. Thereby, the specimen sections are evenly distributed over the specimen carriers. Since not all structures are necessarily detected on all specimen carriers, this ensures that all structures are detected at evenly spaced depths in the specimen. Thereby, a more faithful three-dimensional reconstruction of the specimen is provided.

In another embodiment a sub-series of consecutive specimen sections is distributed over the specimen carriers such that each specimen carrier is provided with exactly one specimen section of the sub-series. In order to be able to generate a faithful three-dimensional reconstruction of the specimen, the targets must be detected evenly over the depth of the sample. Since each specimen carrier detects a different set of targets, a uniform detection is ensured by distributing the sub-series over all specimen carriers.

In another embodiment, if the specimen sections are numbered I =1, 2 ..., n according to a cutting order in which the specimen is cut into and the specimen carriers are numbered k = 1, 2, ..., m, the specimen carrier k is provided with the specimen sections I = k, I = k + m, I = k + 2m, ..., I = k+(p-1)m, wherein n is greater than or equal to m, and wherein p is a total number of the specimen cuts arranged on the specimen carrier k and selected such that I = k + (p - 1) × m is not greater than n. For example, the specimen sections are number 1 to 15 according to the order in which the specimen was cut. The specimen carriers are numbered 1 to 3. In this example, the specimen carrier 1 would be provided with the specimen sections numbered 1, 4, 7, 10, and 13. In this embodiment, sequentially cut sub-series are arranged in a nested manner on the specimen carriers. Preferably, each specimen carrier is provided with exactly one specimen section of each of the sub-series. This nested arrangement ensures that the targets are uniformly detected over the whole depth of the specimen. The uniform detection in turn allows a faithful three-dimensional reconstruction of the specimen as the overall image of the specimen.

In another embodiment, among the multiple specimen sections, at least two sections are arranged on the same specimen carrier and stained with the same marker or set of markers, while at least one intermediate section which is located in the specimen between said two sections before cutting, is arranged on a different specimen carrier and stained with a different marker or a different set of markers, respectively. In case that a matching marker position is detected in the individual images generated from said two sections, a corresponding position is defined in the individual image generated from the intermediate section as a virtual marker position. Not all targets are necessarily detected for all specimen carriers. Thus, gaps may appear, leaving an incomplete picture of the specimen. In this embodiment, when a target is located in corresponding positions in the two sections arranged on the same specimen carrier, it is inferred that the target is also present at a corresponding position in the intermediate section, i.e. the virtual marker position, even if the target cannot be detected in the intermediate section because the intermediate section has not been stained with the appropriate marker or set of markers. This closes the gap mentioned above, thereby providing a more complete image of the specimen.

In another embodiment the overall image of the specimen is generated as a three-dimensional map that indicates the marker positions including the virtual marker positions in each specimen section. The overall image is generated as a three-dimensional reconstruction of the specimen including the virtual marker positions, i.e. inferred positions of markers, thereby providing a very faithful and accurate depiction of the specimen.

In another embodiment the individual images of the stained specimen sections are generated in parallel by means of multiple imaging devices. The imaging devices may be identical, for example the same type of microscope or slide scanner, or different. By parallelizing the imaging step, in particular by assigning a particular specimen carrier to be imaged by a particular imaging device, the method is significantly speed up.

In another embodiment the specimen is cut into specimen sections having a thickness in a range from 30 nm to 300 nm. Preferably, the specimen is cut into ultra-thin specimen sections, i.e. specimen sections having a thickness of 200 nm or less. Such ultra-thin specimen sections can be cut by an ultramicrotome, in particular a cryo-ultramicrotome. The thickness of the specimen sections determines the resolution in z-direction that can be achieved by this method. Thus, ideally, the thickness of the sample sections is approximately equal to or less than the diameter of the smallest structure to be resolved by the method. Another advantage of thin sections is that most markers have a limited depth of penetration in particular during the staining process. By using thin sections, the sections can be evenly (and possibly faster) stained, thereby providing better images.

In another embodiment the specimen is cut into a ribbon in which the specimen sections are connected to each other in series. Such a ribbon of specimen sections is particularly easy to handle and fix to the specimen carriers.

In another embodiment the specimen carriers are provided with section labels defining a distribution order in which the specimen sections are successively distributed over the specimen carriers, said distribution order corresponding to a cutting order in which the specimen is cut into the specimen sections. The section labels allow a user and/or an imaging device to correctly identify the specimen sections. This greatly simplifies the process of generating the overall image, in particular when the overall image is a three-dimensional reconstruction of the specimen.

In another embodiment the section labels assigned to the specimen sections are identified when generating the individual images of the specimen sections. The individual images of the specimen sections may be combined to the overall image in accordance with the identified section labels. Preferably, in this embodiment, the section labels are automatically identified, for example by the imaging device generating the individual images of the stained specimen sections. This significantly accelerates the process of creating the overall image.

In another embodiment at least one of the specimen sections underwent a laser microdissection method step and a subsequent molecular biological analysis providing a position specific feedback of a molecular biologic result. The overall image of the specimen is generated taking the position specific feedback into account. In particular, the position specific feedback may be a visualization of the molecular content, for example a marker. The molecular biological analysis may be, for example, an analysis such as Mass Spectrometry, Next Generation Sequencing, Microarray analysis, or quantitative polymerase chain reaction. This embodiment allows to visualize many more targets, for example 2000 and more, in particular biomolecules, than would be possible with any dye-set without iterative staining, thereby providing a more complete image of the specimen.

In another embodiment at least one of the specimen sections underwent a correlative light and electron microscopy method step to generate an additional image of said specimen section. The overall image of the specimen is generated taking the additional image into account. Correlative light and electron microscopy allows to visualize much finer details than any light microscope. For example, it is possible to visualize different confirmations of the same protein within a spatial context. The additional image can thus be used to provide a more complete image of the specimen.

In another embodiment at least one of the specimen sections is stained using a fluorescent dye and an antifade is applied to said at least one specimen section. Antifade protects fluorescent dyes from bleaching, making the fluorescence signal stronger. However, antifade cannot be used for iterative staining processes where the fluorescent dyes need to be deactivated after each imaging step. Since the proposed method does not rely on iterative staining, antifade may be used to boost the signal strength of fluorescent dyes, thereby providing better images of the specimen sections.

In another embodiment a required number of specimen carriers (a) and/or a thickness per specimen section (d) are determined based on a desired number of biomarkers (n), a number of available detection channels (f), a sample thickness (g) and a maximum number of specimen sections per sample carrier (s) according to at least one of the equations: a = n/(f - 1), a = n/f and d = g/(a × s). The available detection channels may correspond to the number of labels that can be distinguished, for example, the number of fluorescence channels of a microscope or slide scanner. In this embodiment, for example the user calculates the required number of specimen carriers and the thickness of the individual specimen sections, for example based on an available biological specimen, like a pathological sample from surgery or a whole mouse organ. This calculation greatly aids the user in the preparation of their experiments.

In another embodiment a required number of specimen carriers (a) and/or a sample thickness (g) are determined based on a desired number of biomarkers (n), a number of available detection channels (f), a thickness per specimen section (d) and a maximum number of specimen sections per sample carrier (s) according to at least one of the equations: a = n/(f - 1), a = n/f and g = d × a × s. In this embodiment, the thickness per specimen section is already given, for example as a constraint of the experiment design. In an example, the thickness per specimen section is set to 30 nm to achieve a better optical resolution in the z-direction during the imaging step than a STED microscope. Preferably, the calculation is performed before the experiment is started to ensure that the overall thickness of the available specimen is sufficient.

In another embodiment a maximum number of biomarkers (n) and/or a sample thickness (g) are determined based on a number of specimen carriers (a), a number of available detection channels (f), a thickness per specimen section (d) and a maximum number of specimen sections per sample carrier (s) according to at least one of the equations: n = a × (f - 1), n = a × f and g = d × a × s. In this embodiment, for example, the user calculates the maximum number of biomarkers and the required specimen thickness prior to the experiment, for example in cases where multiple marker sets are available for different pathways. In such a case, first the specimen thickness for a subset of markers is calculated. Afterwards the number of markers that could be used for the remaining specimen is determined.

In another embodiment a maximum number of biomarkers (n) and/or a number of specimen sections per sample carrier (s) is determined based on the number of specimen carriers (a), a number of available detection channels (f), a thickness per specimen section (d) and a sample thickness (g) according to at least one of the equations: n = a × (f - 1), n = a × f and s = (g/d)/a = g/(d × a). In this embodiment, the thickness of the specimen is limited, and the maximum number of biomarkers and the section thickness need to be determined prior to starting the experiment. For example, a tumor section of 2 mm is available and needs to be distributed among 20 specimen carriers for a slide loader with 4 fluorescence channels. The calculation allows to determine the maximum number of detectable biomarker as well as the thickness required per specimen section.

In the previously described embodiments, the calculations are only exemplary performed by a user. The calculations may also be performed automatically, for example by an experiment design software, and/or as part of an automated workflow.

For the equations using (f - 1) as the number of available detection channels it is assumed that one of the available detection channels is used to detect the same target in all specimen sections as a reference. For example, DAPI is used to stain cell nuclei in all specimen sections such that the cell nuclei can be used to align the individual images for generating the overall image. In case no such reference channel is provided, the, the equations above might use f instead of (f - 1).

The invention further relates to a set of specimen carriers for use in the method described above. The set comprises a plurality of section labels configured to define a distribution order in which a series of specimen sections cut from a specimen is intended to be successively distributed over the specimen carriers, said distribution order corresponding to a cutting order in which the specimen is cut into the series of specimen sections.

The section labels allow a user and/or an imaging device to correctly identify the specimen sections when performing the method described above. Thus, the proposed set of specimen carriers greatly aids in the performance of the method described above. The set therefore has the same advantages as said method. In particular, the set may be supplemented with the features of the dependent claims directed at the method. Furthermore, the method described above may be supplemented with the features described in this document in connection with the set.

In an embodiment each specimen carrier comprises at least one section receiving area configured to receive one of the specimen sections. Each section label may be configured to indicate a predetermined rank within the distribution order at which said section receiving area is intended to receive the specimen section. In this embodiment, the receiving areas are pre-labeled according to the distribution order. This ensures that the specimen sections are arranged in the correct order and with the correct assignment on the specimen carriers as soon as the specimen sections are mounted. This helps to avoid confusion between the specimen sections later on.

In another embodiment the set comprises a plurality of individual carrier elements. Each carrier element may be configured to carry one of the specimen sections and to be arranged together with said specimen section on the associated section receiving area. For example, the individual carrier element may be a slide or an adhesive piece. In particular, the individual carrier element is configured to be interoperable with other laboratory equipment such as microtomes. This interoperability ensures that the method can be easily integrated into existing laboratory workflows, making the proposed set of specimen carriers very versatile.

In another embodiment each section label is provided on the specimen carrier adjacent the associated section receiving area. Alternatively, each section label is provided on the associated carrier element. For example, the section label may be preprinted on the specimen carriers or the carrier elements, respectively. Instead of direct pre-labeling, stickers with the section label printed on them, or stamps for stamping the section labels onto the specimen carriers or the carrier elements, respectively, after mounting may also be used. Another possibility is to individually print the section labels onto the specimen carriers or the carrier elements during an experiment. This ensures that the specimen sections can be arranged according to the correct assignment on the specimen carriers. This greatly aids in performing the above-described method.

In another embodiment the section labels are formed from a fluorescent dye. This ensures that the section labels can be reliably detected in at least one fluorescence channel during the imaging step, and no additional bright field imaging is required just to detect the section labels. This means that the method described above can be carried out even more quickly. It is further advantageous if the fluorescent dye is visible in a reference channel, such as DAPI, but not in other channels, so as not to mask relevant fluorescence signals from biomarkers.

In another embodiment each specimen carrier further comprises a specimen identifier. The identifier may be a bar code or similar machine-readable label for automatic identification. The specimen identifier allows each specimen carrier to be uniquely associated with a specimen, making it harder to misidentify or mix up specimen carriers.

### Short Description of the Figures

Hereinafter, specific embodiments are described referring to the drawings, wherein:
- Figure 1: is a schematic view of a specimen and specimen sections illustrating a first step of a method for examining a specimen according to an embodiment;
- Figures 2a to 2c: are schematic views of the specimen sections and specimen carriers illustrating a second step of the method for examining a specimen;
- Figure 3: illustrates a third step of the method for examining a specimen in which the specimen sections are stained using markers;
- Figures 4a to 4c: illustrate a fourth step of the method for examining a specimen in which the specimen carriers are imaged;
- Figures 5a to 5d: illustrate a fifth step of the method for examining a specimen in which an overall image of the specimen is generated;
- Figure 6: is a schematic view of a set of specimen carriers according to an embodiment; and
- Figure 7: is a schematic view of another set of specimen carriers according to another embodiment.

### Detailed Description

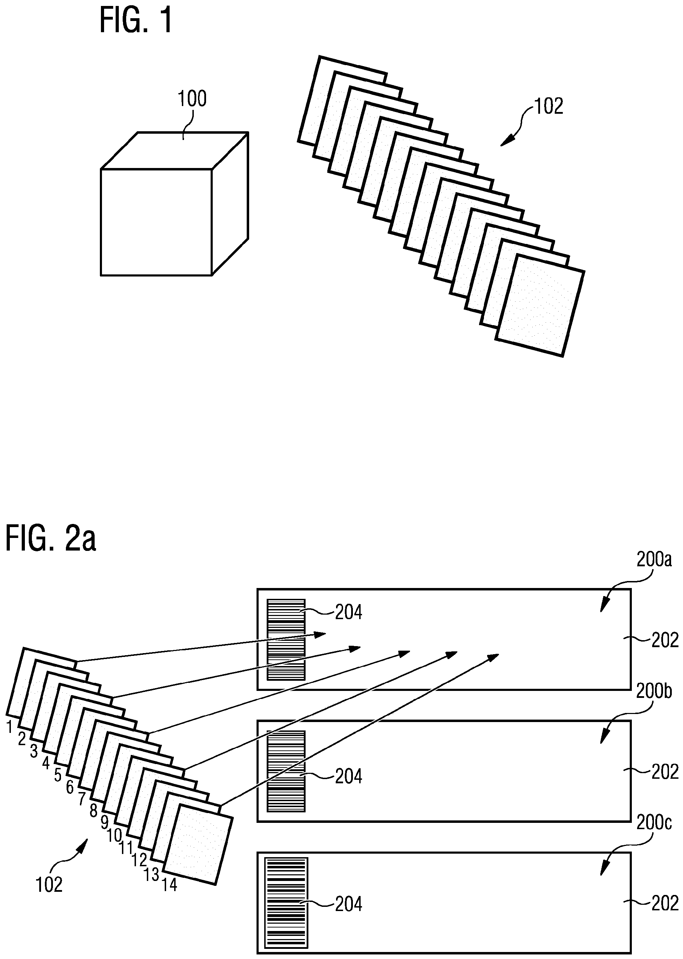

Figure 1 is a schematic view of a specimen 100 and specimen sections 102 illustrating a first step of a method for examining a specimen 100 according to an embodiment.

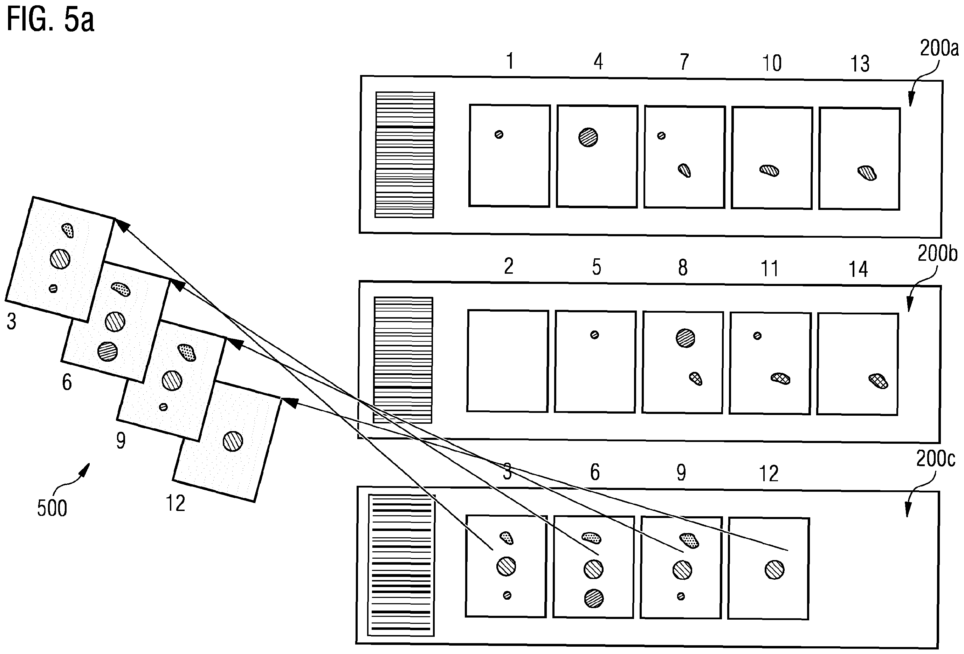

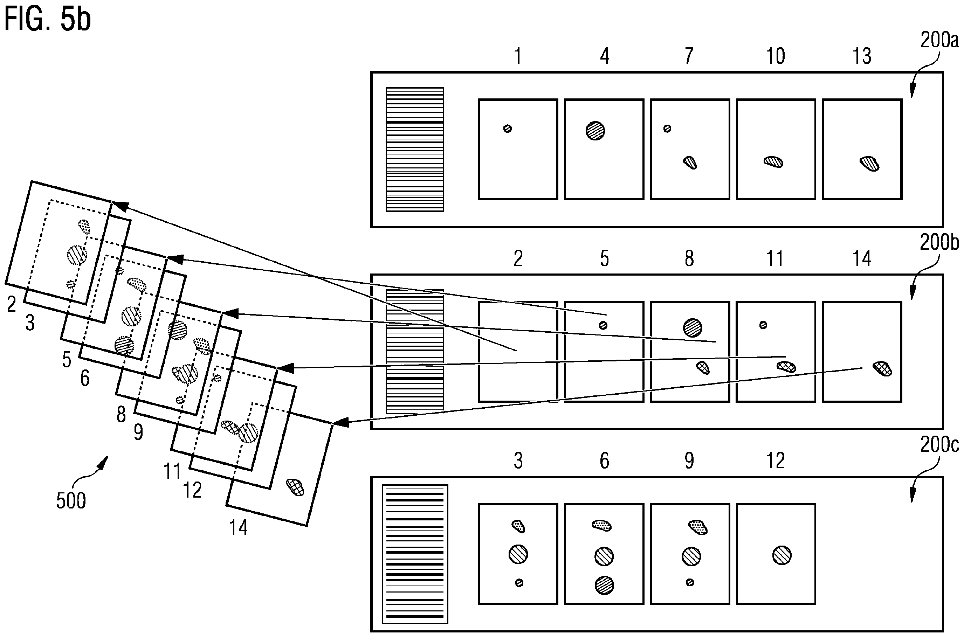

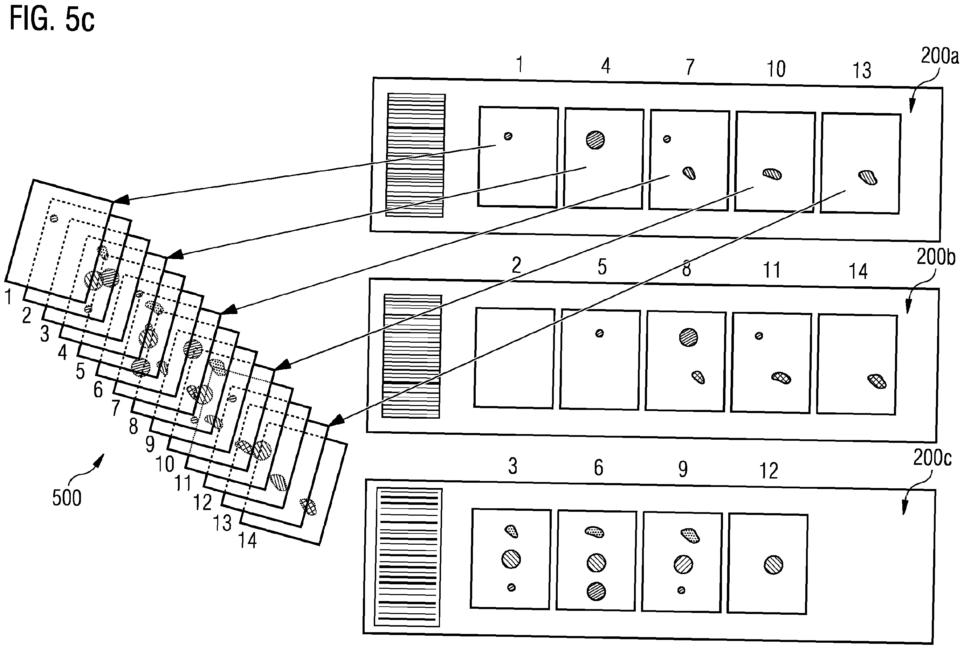

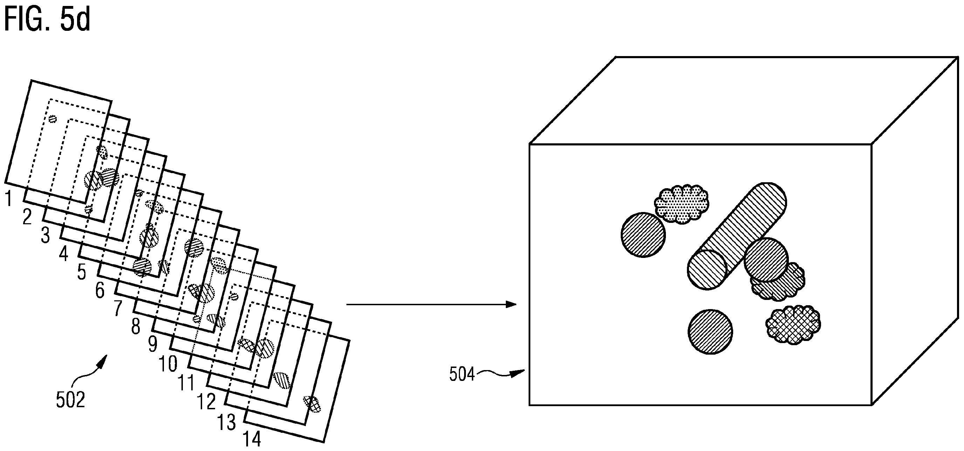

The method is performed to generate an overall image 504 of the specimen 100 from individual images 500 of the specimen sections 102 (c.f. Figure 5), in particular in the form of a three-dimensional reconstruction of the specimen 100. The specimen 100 may be a biological sample such as a tissue section, cell culture, or organ slice, commonly used in fields like pathology, cancer research, and developmental biology. Only exemplary, the specimen 100 is shown to be in the shape of a cuboid. The specimen 100 may have any other shape. The specimen sections 102 are thin sections cut from the specimen 100. To illustrate the method, 14 specimen sections 102 are exemplary shown. The specimen sections 102 have a thickness in the range from 30 nm to 300 nm. The thickness determines the optical resolution in z-direction of the overall image 504, when the overall image 504 is a three-dimensional reconstruction of the specimen 100. For example, a thickness of around 30 nm results in a resolution in z-direction, i.e. along an optical axis of an imaging device, comparable to if not better than a STED microscope.

To cut the specimen sections 102, a microtome is used, in particular an ultramicrotome, i.e. a microtome that can cut sections of 150 nm thickness or less. Further, cryo-ultramicrotomes may be used to cut the ultra-thin specimen sections 102. To prepare the specimen 100 for sectioning in a microtome, it may be embedded in a suitable medium like paraffin or resin, ensuring it is supported and stabilized for precise and thin sectioning. For a cryo-ultramicrotome, the specimen 100 is rapidly frozen to preserve its structure and moisture content, enabling fine sectioning at low temperatures without the need for embedding in a medium like paraffin. The specimen sections 102 cut in this way are then further processed in a second step of the method, which is described below with reference to Figures 2a to 2c.

Figures 2a to 2c are schematic views of the specimen sections 102 and specimen carriers 200a, 200b, 200c illustrating an example of the second step of the method for examining a specimen 100.

The specimen sections 102 are labelled 1 to 14 in the order they have been cut from the sample. During the second step of the method the specimen sections 102 will be distributed over the specimen carriers 200a, 200b, 200c in a specific manner. The manner of distribution ensures that the specimen sections 102 arranged on one of the specimen carriers 200a, 200b, 200c are selected from evenly spaced positions along the depth of the specimen 100, and that the specimen sections 102 arranged on the remaining specimen carriers 200a, 200b, 200c are selected from positions in between. This ensures a particularly faithful three-dimensional reconstruction.

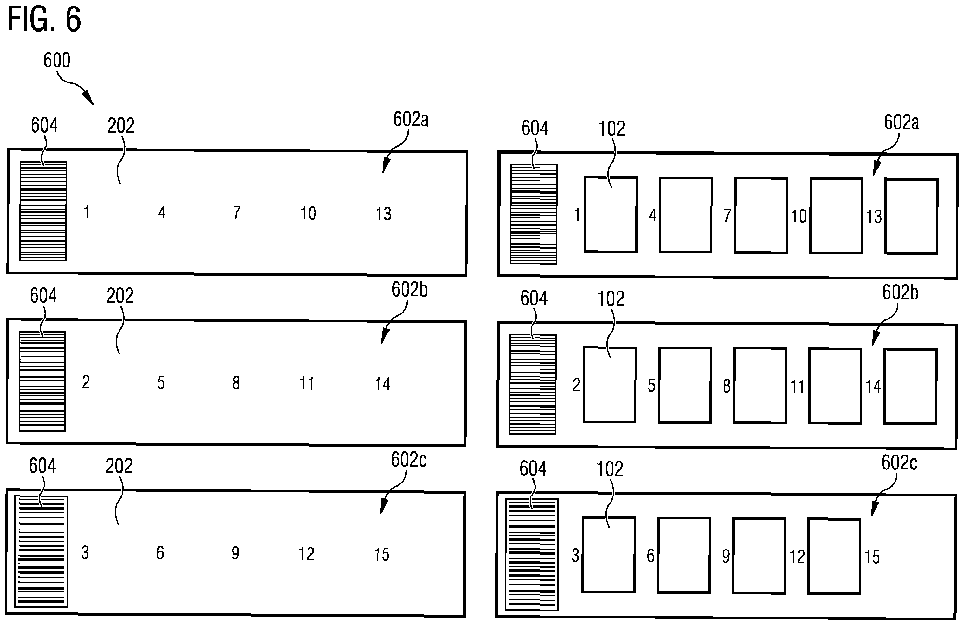

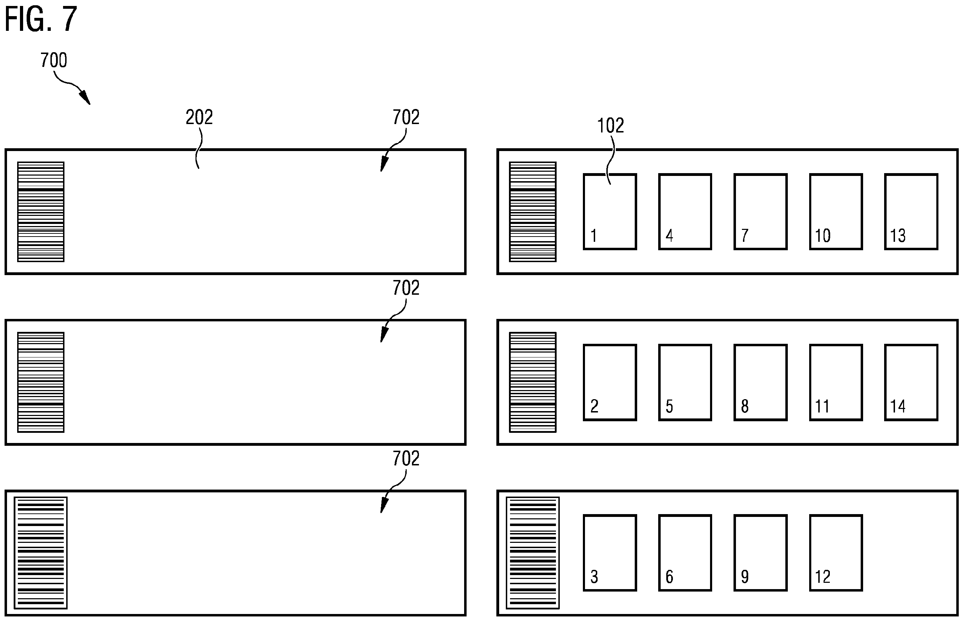

The specimen carriers 200a, 200b, 200c comprise section receiving areas 202 configured to receive at least one of the specimen sections 102 each. Further, the specimen carriers 200a, 200b, 200c shown in Figures 2a to 2c comprise unique machine-readable identifiers 204, exemplary formed as barcodes, that allow the automatic and unique identification of each specimen carrier 200a, 200b, 200c in the course of the method. This prevents mix-ups and ensures that the individual images 500 can be assigned to the correct position when the overall image 504 is created. The specimen carriers 200a, 200b, 200c form a set 600, 700 that is described in more detail below with reference to Figures 6 and 7.

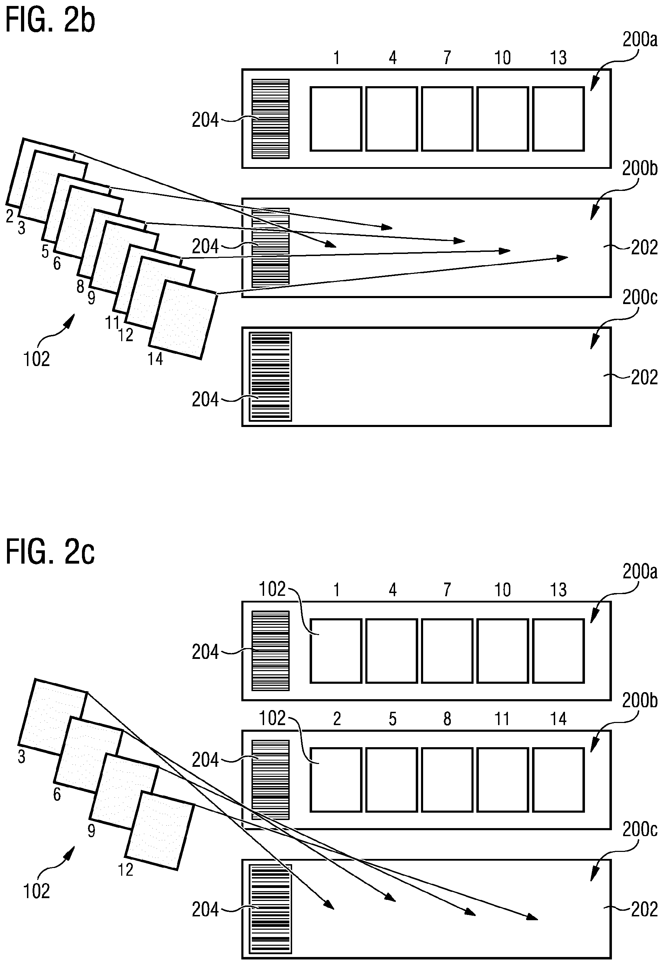

Figure 2a illustrates a first sub-step of the second step of the method for examining a specimen 100. In the first sub-step, the specimen sections 102 labelled 1, 4, 7, 10, and 13 are arranged on a first specimen carrier 200a. Figure 2b illustrates a second sub-step of the second step of the method for examining a specimen 100. In the second sub-step, the specimen sections 102 labelled 2, 5, 8, 11, and 14 are arranged on a second specimen carrier 200b. Figure 2c illustrates a third sub-step of the second step of the method for examining a specimen 100. In the third sub-step, the specimen sections 102 labelled 3, 6, 9, and 12 are arranged on a third specimen carrier 200c. Since 14 is not divisible by 5, the last of the specimen carriers 200a, 200b, 200c only receives four instead of five specimen sections 102.

In general, the specimen sections 102 labelled l = k, l = k + m, l = k + 2m, ..., I = k + (p - 1) m are arranged on the k-th specimen carrier. The specimen sections 102 are labelled l = 1 to n and the specimen carriers 200a, 200b, 200c are labelled k = 1 to m, wherein n is greater than or equal to m. The variable p denotes the maximum number of specimen sections 102 that can be arranged on one of the specimen carriers 200a, 200b, 200c and is selected such that the maximum value of l = k + (p - 1) m is not greater than n.

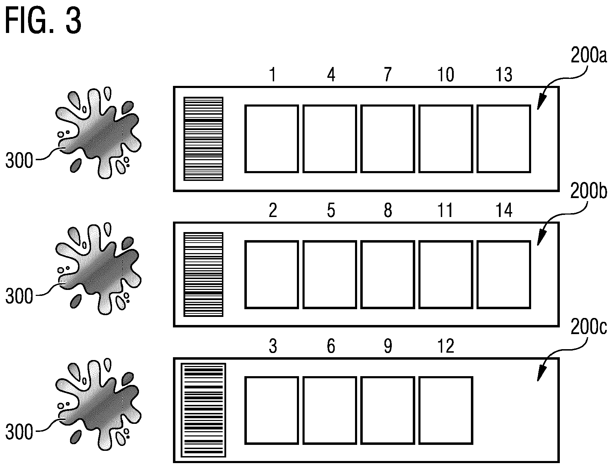

Figure 3 illustrates a third step of the method for examining a specimen 100 in which the specimen sections 102 are stained using schematically shown markers 300.

The markers 300 comprise an affinity reagent that binds to a specific target in the sample, for example a specific biomolecule or another biomarker. The markers 300 further comprise a detectable label, for example a fluorescent dye conjugated to the affinity reagent. The labels of the marker are detected later in the following fourth step using an imaging device 400, for example a microscope or a slide scanner. The specimen sections 102 of each of the specimen carriers 200a, 200b, 200c are thus stained in the third step with a single marker 300 or with a set of markers 300 that is chosen such that the imaging device 400 is capable of distinguishing the labels of said set of markers 300. For example, if the imaging device 400 can distinguish 6 different wavelength bands, i.e. has 6 different fluorescence channels, up to 6 different fluorescent dyes may be used as the labels for the markers 300. However, since the targets can be distinguished by the specimen carrier 200a, 200b, 200c they are detected on, the same labels may be reused for other markers 300 that are used in staining the specimen sections 102 of another specimen carrier 200a, 200b, 200c. Accordingly, the number of targets that can be distinguished using the method is equal to the number of channels of the used imaging device 400 times the number of specimen carriers 200a, 200b, 200c used. However, it may be advantageous to use one of the channels as a reference channel for detecting a reference marker that is used to stain every specimen section 102. The use of a reference channel makes it easier to align the individual images 500 later.

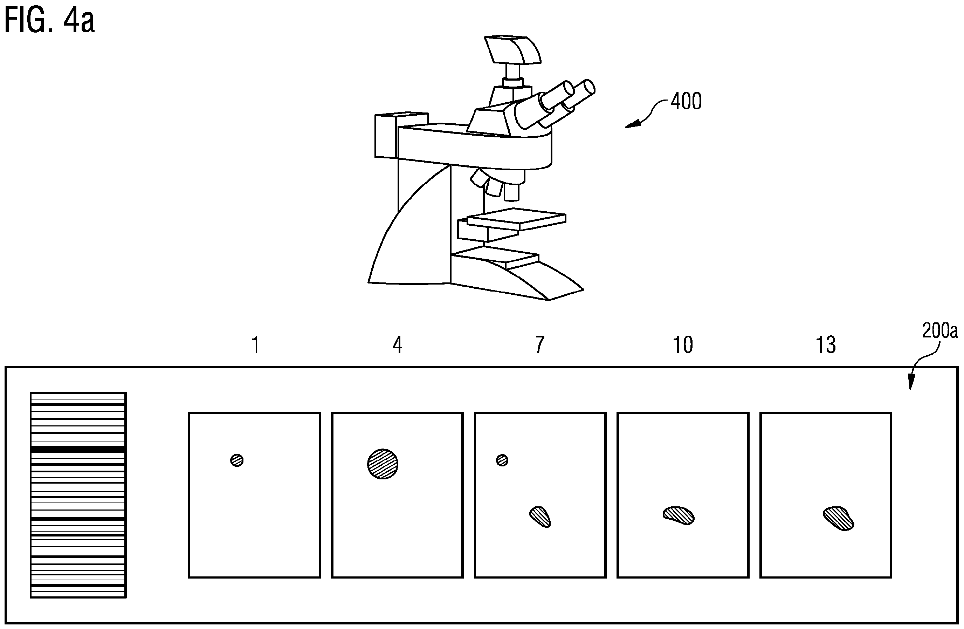

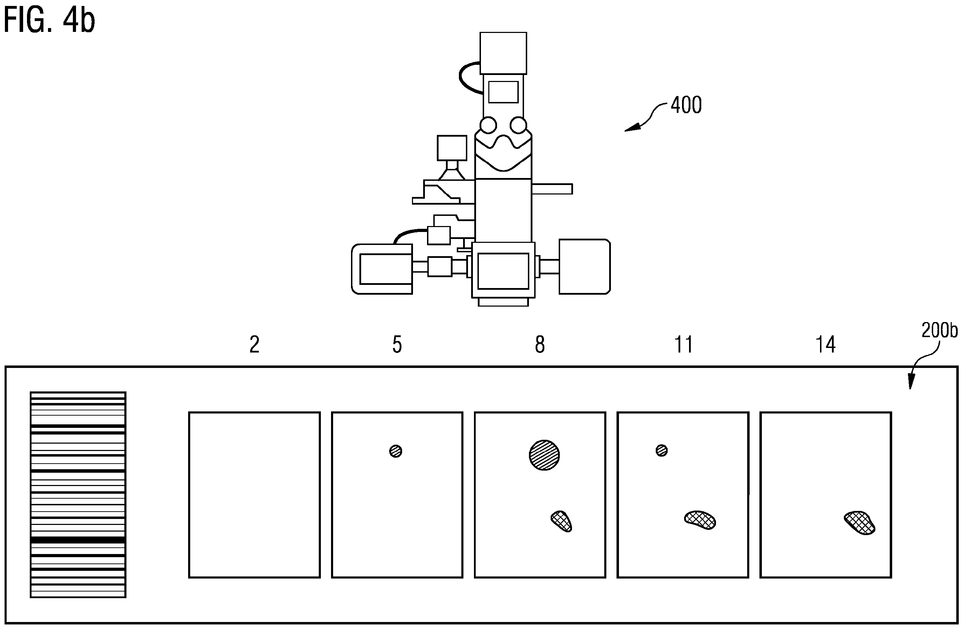

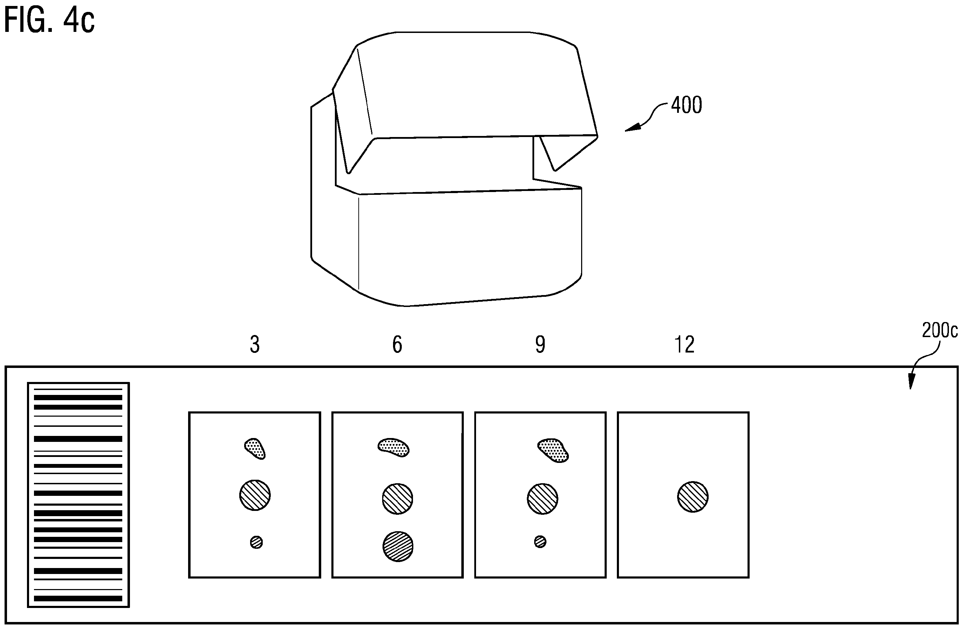

Figures 4a to 4c illustrate a fourth step of the method for examining a specimen 100 in which the specimen carriers 200a, 200b, 200c are imaged. Figure 4a schematically shows that the specimen carrier 200a is imaged by a first microscope 400. Figure 4b schematically shows that the specimen carrier 200b is imaged by a second (different) microscope 400. Figure 4c schematically shows that the specimen carrier 200c is imaged by a further (different) microscope 400.

In the fourth step, the specimen carriers 200a, 200b, 200c are imaged to generate the individual images 500 of the specimen sections 102. The specimen carriers 200a, 200b, 200c are imaged using one or more imaging devices 400 such as microscopes, in particular light microscopes, fluorescence microscopes, or confocal microscopes, and slide scanners. The imaging device 400 may also be part of an integrated system such as a digital pathology system. Two or more of the specimen carriers 200a, 200b, 200c may be imaged in parallel, either in the same imaging device 400 or in different imaging devices 400, to speed up the imaging. The imaging devices 400 used for parallel imaging may be identical, i.e. the same make of microscope, similar, i.e. the same type of microscope, or different, i.e. a microscope and a slide scanner.

A different set of markers 300 has been used to stain each of the specimen carriers 200a, 200b, 200c. Each of the markers 300 binds to one specific target. Thus, as can be seen in Figure 4, different structures are imaged on the different specimen carriers 200a, 200b, 200c. However, one of the markers 300 that binds to a predefined reference target, for example a cell nucleus, has been used to stain all specimen sections 102. The positions of this reference target in the individual images 500 are used to align the individual images 500 when reconstructing the overall image 504 of the specimen 100, e.g. by using an appropriate computation program run for example on a computer.

Figure 5 illustrates a fifth step of the method for examining a specimen 100 in which the overall image 504 of the specimen 100 is generated.

In the fifth step, the individual images 500 are collected and sorted into an image stack 502 according to the order the corresponding specimen sections 102 have been cut from the specimen 100 in the first step. In Figures 5a to 5c the specimen sections 102 have been cut in the order they are numbered. The individual images 500 in the image stack 502 are registered, i.e. aligned with one another, thereby ensuring that each individual image is correctly positioned in relation to the other individual images 500 in the image stack 502, accounting for any shifts or rotations that might have occurred during image acquisition. Additional image processing may be performed such as noise reduction, contrast enhancement, and sharpening in order to improve the quality of the individual images 500 so that features within the specimen 100 are more visible and distinguishable in the overall image 504.

From the image stack 502 the overall image 504 of the specimen 100 is generated. For this purpose, interpolation may be performed, filling in the gaps to create a smoother, continuous three-dimensional representation. For this, when the same marker is detected at corresponding positions in two different specimen sections 102, a virtual marker position may be generated in the individual images 500 generated from the specimen sections 102 arranged in between. A smoother, continuous three-dimensional representation may also be achieved by cutting the specimen sections 102 thinner such that structures on the specimen 100 appear in more than one specimen section 102 and can be more easily reconstructed.

The more specimen sections 102 are placed on each specimen carrier 200a, 200b, 200c, the more specimen 100 depth is covered by the overall image 504. In case only one specimen section 102 is arranged on each of the specimen carriers 200a, 200b, 200c, a two-dimensional image may be reconstructed as the overall image 504 instead.

Figure 6 is a schematic view of a set 600 of specimen carriers 602a, 602b, 602c according to an embodiment.

The set 600 of specimen carriers 602a, 602b, 602c may be used in particular in the method described above with reference to Figures 1 to 5. Figure 6 shows the set 600 of specimen carriers 602a, 602b, 602c twice, one set 600 on the left being empty, and one set 600 on the right being loaded with specimen sections 102.

Each specimen carrier 602a, 602b, 602c of the set comprises a unique identifier 604, exemplary shown as a bar code. The unique identifiers 604 may be used to identify each specimen carrier 602a, 602b, 602c and/or the set 600. Since the set 600 is used to carry the specimen sections 102 of a single specimen 100, the unique identifiers 604 may also be used to uniquely identify the specimen 100. Each of the specimen carriers 602a, 602b, 602c further comprises section receiving areas 202. In the embodiment shown in Figure 6 each specimen carrier 602a, 602b, 602c exemplary comprises 5 section receiving areas 202. Each of the section receiving areas 202 has an adjacent section label comprising a number 1 to 15 left of the respective section receiving area 202. The numbering of the section labels is such to facilitate the interlocking arrangement described above with reference to Figures 2a to 2c. Since this arrangement depends on the total number of specimen carriers 602a, 602b, 602c in the set 600, the numbering is also dependent on the total number of specimen carriers 602a, 602b, 602c. For example, in the embodiment shown in Figure 6, the section receiving areas 202 of a first specimen carrier 602a are labelled 1, 4, 7, 10, and 14. In a set 600 of four specimen carriers 602a, 602b, 602c, the section receiving areas 202 of the first specimen carrier 602a would be labelled 1, 5, 9, 13, and 17.

The specimen section 102 may be mounted directly onto the specimen carriers 602a, 602b, 602c. Alternatively, or additionally, the set 600 may comprise a plurality of individual carrier elements. Each carrier element is configured to receive one of the specimen sections 102 and configured to be received by one of the receiving areas 202. The carrier elements may be a slide made from a plastic or a glass, or an adhesive piece such as a piece of (optically transparent) tape. Such carrier elements allow for easier handling of the often delicate specimen sections 102.

Figure 7 is a schematic view of a set 700 of specimen carriers 702 according to another embodiment.

The set 700 of specimen carriers 702 according to Figure 7 is distinguished from set 600 of specimen carriers 602a, 602b, 602c according to Figure 6 in having no section labels. Instead, the section labels are provided on the carrier element. Alternatively, when no carrier elements are used, the section labels may be either printed or stamped onto the specimen sections 102.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Specimen
- 102: Specimen section
- 200a, 200b, 200c: Specimen carrier
- 202: Section receiving area
- 204: Identifier
- 300: Marker
- 400: Imaging device
- 500: Individual image
- 502: Image stack
- 504: Overall image
- 600: Set
- 602a, 602b, 602c: Specimen carrier
- 604: Identifier
- 700: Set
- 702: Specimen carrier

## Claims

1. A method for examining a specimen (100), comprising the following steps:
cutting the specimen (100) into a series of specimen sections (102),
distributing the specimen sections (102) over multiple specimen carriers (200a, 200b, 200c, 602a, 602b, 602c, 702) to provide each specimen carrier with at least one of the specimen sections (102),
staining at least some of the specimen sections (102) distributed over the specimen carriers (200a, 200b, 200c, 602a, 602b, 602c, 702),
generating individual images (500) of the stained specimen sections (102) arranged on the specimen carriers (200a, 200b, 200c, 602a, 602b, 602c, 702), and
combining the individual images (500) of the stained specimen sections (102) to an overall image (504) of the specimen (100).

2. The method according to claim 1, wherein the at least one specimen (100) section arranged on each specimen carrier is stained with at least one marker which is different from a marker of any other specimen carrier.

3. The method according to claim 1 or 2, wherein at least some of the specimen carriers (200a, 200b, 200c, 602a, 602b, 602c, 702) are each provided with more than one of the specimen sections (102).

4. The method according to any one of the preceding claims, wherein the specimen sections (102) are distributed over the specimen carriers (200a, 200b, 200c, 602a, 602b, 602c, 702) such that the number of specimen sections (102) on each specimen carrier differs at most by one from the number of specimen sections (102) on any other specimen carrier.

5. The method according to any one of the preceding claims, wherein a sub-series of consecutive specimen sections (102) is distributed over the specimen carriers (200a, 200b, 200c, 602a, 602b, 602c, 702) such that each specimen carrier is provided with exactly one specimen (100) section of the sub-series.

6. The method according to any one of the preceding claims, wherein, if the specimen sections (102) are numbered I =1, 2 ..., n according to a cutting order in which the specimen (100) is cut into and the specimen carriers (200a, 200b, 200c, 602a, 602b, 602c, 702) are numbered k = 1, 2, ..., m, the specimen carrier k is provided with the specimen sections (102) l = k, I = k + m, I = k + 2m, ..., I = k+(p-1)m, wherein n is greater than or equal to m, and wherein p is a total number of the specimen (100) cuts arranged on the specimen carrier k and selected such that I = k + (p - 1) × m is not greater than n.

7. The method according to any one of the preceding claims, wherein, among the multiple specimen sections (102), at least two sections are arranged on the same specimen carrier and stained with the same marker or set of markers (300), while at least one intermediate section which is located in the specimen (100) between said two sections before cutting, is arranged on a different specimen carrier and stained with a different marker or a different set of markers (300), respectively,
wherein, in case that a matching marker position is detected in the individual images (500) generated from said two sections, a corresponding position is defined in the individual image generated from the intermediate section as a virtual marker position.

8. The method according to claim 7, wherein the overall image (504) of the specimen (100) is generated as a three-dimensional map that indicates the marker positions including the virtual marker positions in each specimen (100) section.

9. The method according to any one of the preceding claims, wherein the individual images (500) of the stained specimen sections (102) are generated in parallel by means of multiple imaging devices 400.

10. The method according to any one of the preceding claims, wherein the specimen (100) is cut into specimen sections (102) having a thickness in a range from 30 nm to 300 nm.

11. The method according to any one of the preceding claims, wherein the specimen (100) is cut into a ribbon in which the specimen sections (102) are connected to each other in series.

12. The method according to any one of the preceding claims, wherein the specimen carriers (200a, 200b, 200c, 602a, 602b, 602c, 702) are provided with section labels defining a distribution order in which the specimen sections (102) are successively distributed over the specimen carriers (200a, 200b, 200c, 602a, 602b, 602c, 702), said distribution order corresponding to a cutting order in which the specimen (100) is cut into the specimen sections (102).

13. The method according to claim 12, wherein the section labels assigned to the specimen sections (102) are identified when generating the individual images (500) of the specimen sections (102), and wherein the individual images (500) of the specimen sections (102) are combined to the overall image (504) in accordance with the identified section labels.

14. The method according to any one of the preceding claims, wherein at least one of the specimen sections (102) underwent a laser microdissection method step and a subsequent molecular biological analysis providing a position specific feedback of a molecular biologic result, and wherein the overall image (504) of the specimen (100) is generated taking the position specific feedback into account.

15. The method according to any one of the preceding claims, wherein at least one of the specimen sections (102) underwent a correlative light and electron microscopy method step to generate an additional image of said specimen (100) section, and wherein the overall image (504) of the specimen (100) is generated taking the additional image into account.

16. The method according to any one of the preceding claims, wherein at least one of the specimen sections (102) is stained using a fluorescent dye and an antifade is applied to said at least one specimen (100) section.

17. The method according to any one of the preceding claims, wherein a required number of specimen carriers (200a, 200b, 200c, 602a, 602b, 602c, 702) (a) and/or a thickness per specimen (100) section (d) are determined based on a desired number of biomarkers (300) (n), a number of available detection channels (f), a sample thickness (g) and a maximum number of specimen sections (102) per sample carrier (s) according to at least one of the equations: a = n/(f -1), a = n/f and d = g/(a × s).

18. A set (600, 700) of specimen carriers (602a, 602b, 602c, 702) for use in the method according to any one of the preceding claims, comprising:
a plurality of section labels configured to define a distribution order in which a series of specimen sections (102) cut from a specimen (100) is intended to be successively distributed over the specimen carriers (602a, 602b, 602c, 702), said distribution order corresponding to a cutting order in which the specimen (100) is cut into the series of specimen sections (102).

19. The set (600, 700) according to claim 18, wherein each specimen carrier (602a, 602b, 602c, 702) comprises at least one section receiving area (202) configured to receive one of the specimen sections (102), and wherein each section label is configured to indicate a predetermined rank within the distribution order at which said section receiving area (202) is intended to receive the specimen (100) section.

20. The set (600, 700) according to claim 18 or 19, comprising a plurality of individual carrier elements, wherein each carrier element is configured to carry one of the specimen sections (102) and to be arranged together with said specimen (100) section on the associated section receiving area (202).

21. The set (600, 700) according to claim of 20, wherein each section label is provided on the specimen carrier (602a, 602b, 602c, 702) adjacent the associated section receiving area (202), or wherein each section label is provided on the associated carrier element.

22. The set (600, 700) according to one of the claims 18 to 21, wherein the section labels are formed from a fluorescent dye.

23. The set (600, 700) according to one of the claims 18 to 22, wherein each specimen carrier (602a, 602b, 602c, 702) further comprises a specimen identifier (604).
